# EUROPEAN PATENT APPLICATION

(11) **EP 3 139 653 A1**
(43) Date of publication of application: **08.03.2017**
(21) Application number: 15306341.7
(22) Date of filing: 01.09.2015
(51) Int. Cl.: H04W 12/12, H04L 29/06

(54) **COMMUNICATION SYSTEM BETWEEN AN ELECTRONIC DEVICE AND A REMOTE SERVER VIA A SECURE SMS CHANNEL**

(71) Applicant: GEMALTO SA, 92190 Meudon (FR)
(72) Inventor: GIESE, Michael, 92190 Meudon (FR); BESTAKOVA, Lucie, 92190 Meudon (FR); CLEMENT-GONZALES, Frederic, 92190 Meudon (FR); DUQUESNOY, Jean-Philippe, 92190 Meudon (FR); BAULT, Jean-Julien, 92190 Meudon (FR); INARD D'ARGENCE, Cyril, 92190 Meudon (FR); LIU, Yi, 92190 Meudon (FR); MUELLENBACH, Eric, 92190 Meudon (FR); COURTAULT, François, 92190 Meudon (FR); FIOUX, Sébastien, 92190 Meudon (FR); PAILLARD, Frederic, 92190 Meudon (FR); ANG, Kok Chai, 92190 Meudon (FR); BAHARSYAH, Muhamad Pramana, 92190 Meudon (FR); YAP, Swee Swee, 92190 Meudon (FR); BEGALE, Sagar, 92190 Meudon (FR); CHEUNG, Susido, 92190 Meudon (FR)
(74) Representative: Lotaut, Yacine Diaw

(57) **Abstract**

The present invention relates to a communication system (SYS) for performing a communication between an electronic device (D) and a remote server (SERV), wherein said communication system (SYS) comprises:
- said remote server (SERV) which comprises a pair of public key (Kpu)-private key (Kpv) and which is adapted to:
- compute a signature (S1) of a command (CD) with said private key (Kpv);
- send to said electronic device (D) said signature (S1) and said command (CD) using a short message service (SMS);
- said electronic device (D) which comprises said public key (Kpu) and which is adapted to:
- receive from said remote server (SERV) said short message service (SMS) comprising said signature (S1) and said command (CD);
- check said signature (S1) with said public key (Kpu);
- execute said command (CD).

## Description

### TECHNICAL FIELD

The present invention relates to a communication system for performing a communication between an electronic device and a remote server.

Such communication system may be used in a non-limitative example with an electronic device such as a mobile phone.

### BACKGROUND OF THE INVENTION

An electronic device such as a mobile phone usually comprises an administration application which permits to control the end-user's mobile phone remotely and which comprises the following capabilities:
- Recording the mobile phone's usages;
- Locating the mobile phone;
- Locking the mobile phone;
- Changing the mobile phone's PIN code (Personal Identification Number);
- Wiping data on the mobile phone etc.

Based on those capabilities, the administration application permits to remotely detect by means of the remote server when the mobile phone gets stolen or is lost and to trigger remotely some anti-theft mechanism or some mobile phone insurance fraud detection. The remote communication between the mobile phone and the remote server is performed through data connection, using WIFI, LTE, 3G, or Mobile Data Network in non-limitative examples.

One problem of this prior art is that when the end-user looses the mobile phone and if there is no data connection, the administration application is no longer accessible remotely and the mobile phone may not be located, locked, monitored or secured. Hence, a thief may uninstall the administration application or even replace the SIM card (Subscriber Identity Module) with a different one so that the mobile phone is no longer accessible by the remote server. It is therefore not possible to protect the mobile phone against a thief.

### SUMMARY OF THE INVENTION

It is an object of the invention to provide a communication system for performing a communication between an electronic device and a remote server, which permits a secure communication between the remote server's commands and the electronic device even if no data connection is available, and more particularly the transmission of commands by the remote server to the electronic device, so that the anti-thief mechanism may be applied.

To this end, there is provided a communication system for performing a communication between an electronic device and a remote server, wherein said communication system comprises:
- said remote server which comprises a pair of public key -private key and which is adapted to:
   - compute a signature of a command with said private key;
   - send to said electronic device said signature and said command using a short message service;
- said electronic device which comprises said public key and which is adapted to:
   - receive from said remote server said short message service comprising said signature and said command;
   - check said signature with said public key;
   - execute said command.

As we will see in further details, the short message service permits to reach an electronic device which has no longer any data connection with the remote server and the use of the pair of public key-private key permits to sign the data transmitted via said short message service so that said short message service is secure.

According to non-limitative embodiments of the invention, the communication system in accordance with the invention further comprises the following characteristics.

In a non-limitative embodiment, said signature and said command are sent using a short message service after a predetermined delay if said remote server has not received from said electronic device any event as a response of said command through a secure channel communication.

In a non-limitative embodiment, said remote server further comprises a secret key and said electronic device further comprises said secret key.

In a non-limitative embodiment,
- said remote server is further adapted to encipher said command with its secret key;
- said electronic device is further adapted to decipher said command with its secret key.

In a non-limitative embodiment, said command further comprises a first timestamp, and said electronic device is adapted to verify said first timestamp.

In a non-limitative embodiment, said command is:
- a get location command; or
- a play sound command; or
- a lock/unlock command; or
- a wipe of data command; or
- a deactivation application command.

In a non-limitative embodiment,
- said electronic device is further adapted to:
   - compute a cryptographic data of an event with its secret key;
   - send to said remote server said cryptographic data and said event via a short message service;
- said remote server is further adapted to:
   - receive from said electronic device said short message service comprising said cryptographic data and said event;
   - check said cryptographic data with its secret key;
   - process said event.

In a non-limitative embodiment, said event comprises a second timestamp, and said remote server is further adapted to verify said second timestamp.

In a non-limitative embodiment,
- said electronic device is further adapted to encipher said event with its secret key;
- said remote server is further adapted to decipher said event with its secret key.

In a non-limitative embodiment, said event is:
- a location event; or
- a play sound event; or
- a lock/unlock event; or
- an unlock failed event; or
- a wipe of data event; or
- an application deactivation event; or
- a phone number changed event.

In a non-limitative embodiment,
- said electronic device is further adapted to:
   - launch an application for the first time;
   - transmit some credentials to said remote server;
   - establish a secure channel communication with said remote server;
   - receive from said remote server via said secure channel communication an application unique identifier and said public key;
   - store said application unique identifier and said public key;
- said remote server is further adapted to:
   - receive said credentials from said electronic device;
   - authenticate said application according to said credentials;
   - generate said application unique identifier;
   - send to said electronic device said application unique identifier and said public key via said secure channel communication.

In a non-limitative embodiment,
- said electronic device is further adapted to:
   - receive from said remote server via said secure channel communication a secret key associated to said electronic device; and
   - store said secret key;
- said remote server is further adapted to:
   - generate said secret key associated to said electronic device; and
   - send to said electronic device said secret key via said secure channel communication.

In a non-limitative embodiment, said electronic device is a mobile phone, a tablet, a smart phone, a notebook.

In a non-limitative embodiment,
- said electronic device comprises a screen and is further adapted to:
   - detect an application deactivation warning;
   - upon said detection, lock its screen;
   - receive a short message service comprising a signature with an unlock command;
   - check said signature with said public key;
   - unlock its screen and deactivate an application;
   - compute a cryptographic data of an application deactivation event with its secret key;
   - send to said remote server said cryptographic data, and said application deactivation event using a short message service;
- said remote server is further adapted to:
   - compute said signature of said unlock command with its private key;
   - send to said electronic device said signature with said unlock command using a short message service;
   - receive a short message service comprising said cryptographic data and said application deactivation event;
   - check said cryptographic data with its secret key.

In a non-limitative embodiment:
- said electronic device is further adapted to:
   - request end-user's credentials;
   - compute a cryptographic data of said end-user's credentials with its secret key; and
   - send to said remote server said cryptographic data and said end-user's credentials using a short message service;
- said remote server is further adapted to:
   - receive said short message service comprising said cryptographic data and said end-user's credentials;
   - check said cryptographic data with its secret key; and
   - check said end-user's credentials.

In a non-limitative embodiment, said secure channel communication is established via an Hyper Text Transfer Protocol using a Transport Layer Security Handshake.

In addition, there is provided a method for performing a communication between an electronic device and a remote server, said remote server comprising a pair of public key-private key and said electronic device comprising said public key, wherein said method further comprises:
- compute by means of said remote server a signature of a command with said private key;
- send by means of said remote server to said electronic device said signature and said command using a short message service;
- receive by means of said electronic device said short message service comprising said signature and said command;
- check by means of said electronic device said signature with said public key; and
- execute by means of said electronic device said command.

In addition, there is provided an electronic device which is adapted to communicate with a remote server which comprises a pair of public key-private key, said electronic device comprising said public key, wherein said electronic device is adapted to:
- receive from said remote server a short message service comprising:
- a signature of a command which has been computed by said remote server with said private key; and
- said command;
- check said signature with said public key;
- execute said command.

In addition, there is provided a remote server which is adapted to communicate with an electronic device, said remote server comprising a pair of public key-private key and said electronic device comprising said public key, wherein said remote server is adapted to:
- compute a signature of a command with said private key;
- send to said electronic device said signature and said command using a short message service

### BRIEF DESCRIPTION OF THE FIGURES

Some embodiments of methods and/or apparatus in accordance with embodiments of the present invention are now described, by way of example only, and with reference to the accompanying drawings, in which:
- Fig. 1 illustrates schematically a non-limitative embodiment of the communication system according to the invention, said communication system comprising an electronic device and a remote server;
- Fig. 2 illustrates schematically a non-limitative embodiment of a set-up phase between the electronic device and the remote server of said communication system of Fig. 1;
- Fig. 3 illustrates schematically a non-limitative embodiment of a transmission of a command from the remote server to the electronic device of said communication system of Fig. 1;
- Fig. 4 illustrates schematically a non-limitative embodiment of a transmission of an event from the electronic device to said remote server of said communication system of Fig. 1;
- Fig. 5 illustrates a non-limitative embodiment of a first use-case using the communication system of Fig. 1 to verify the electronic device's end-user right to deactivate and uninstall an application of said electronic device of Fig. 1;
- Fig. 6 illustrates a non-limitative embodiment of a second use-case using the communication system of Fig. 1 to verify the electronic device's end-user right to deactivate and uninstall an application of said electronic device of Fig. 1.

### DESCRIPTION OF EMBODIMENTS OF THE INVENTION

In the following description, well-known functions or constructions by the man skilled in the art are not described in detail since they would obscure the invention in unnecessary detail.

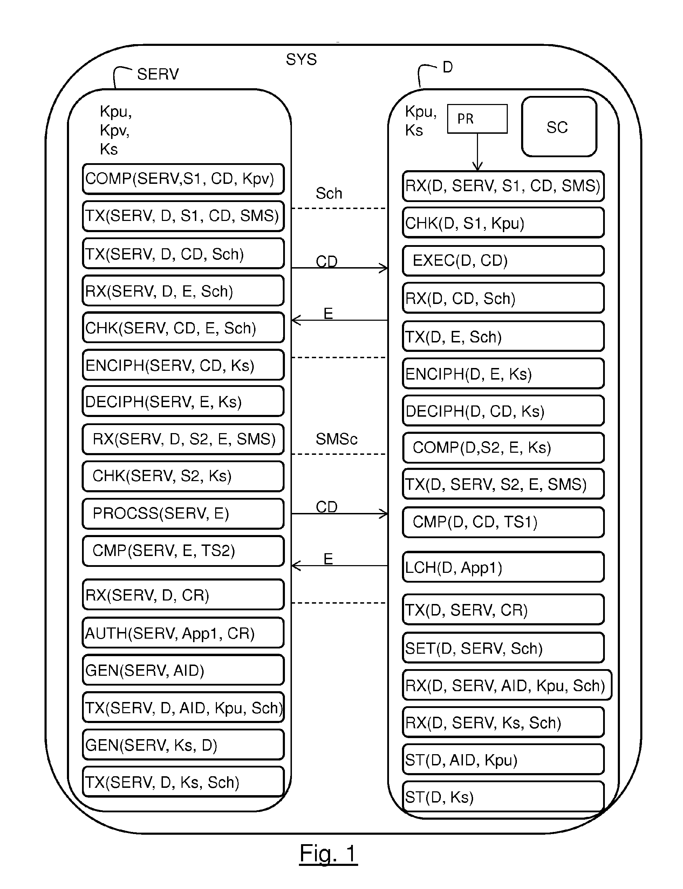

The present invention relates to a communication system SYS for performing a communication between an electronic device D and a remote server SERV. Said communication system SYS is illustrated in Fig. 1.

The communication system SYS comprises:
- said remote server SERV; and
- said electronic device D.

In a non-limitative embodiment, the electronic device D is a portable electronic device. In non-limitative examples, the portable electronic device D is a mobile phone, a tablet, a smart phone, a notebook etc.

For the following, the mobile phone will be taken as a non-limitative example. The mobile phone comprises a screen SC.

For the following, an application App is a set of one or more programs designed to carry out one or a plurality of functions for a specific purpose. A function comprises one or a plurality of operations.

The remote server SERV and the electronic device D are adapted to remotely communicate with each other using a secure channel communication Sch which is a data channel such as an HTTP (HyperText Transfer Protocol) channel in a non-limitative example. In the following description, the term secure channel communication Sch or data channel Sch will be used indifferently. The data connection is performed using WIFI, LTE, 3G, or Mobile Data Network in non-limitative examples.

In the following, the HTTP channel will be taken as a non-limitative example.

As will be described in details in the following, if said HTTP channel is not available anymore, the remote server SERV and the electronic device D will be able to securely communicate via another channel, which is a short message service channel SMSC. This SMS channel serves as a fallback channel when the HTTP channel is not available. The remote server SERV is therefore able to send commands CD to said electronic device D using a short message service SMS, and the electronic device D is able to send events E to said remote server SERV using also a short message service SMS.

Moreover, to secure the SMS channel, commands CD and events E are authenticated, which ensures that their content cannot be modified. The authentication relies on:
- asymmetric cryptography algorithm for remote server to electronic device communication: the electronic device D knows that the command CD comes from the remote server SERV. The electronic device D uses a public key to verify the signature of the command CD;
- symmetric cryptography algorithm for electronic device to remote server communication: the remote server SERV knows that the event E comes from the electronic device D. The remote server SERV uses a secret key to verify the cryptographic data of the event E.

Hence, a secure SMS communication is performed between the remote server SERV and the electronic device D.

The electronic device D and the remote server SERV are described hereinafter in details.

### • Remote server SERV

The remote server SERV is illustrated in Fig. 1.

Said remote server SERV comprises a pair of public key Kpu-private key Kpv.

It is to be noted that on the remote server SERV the pair of private key Kpv-public key Kpu is securely stored. A key pair (public/private) is associated for each tenant. The private key Kpv is only known by the remote server SERV, and the public key Kpu is known by any registered electronic device D of the tenant.

A tenant is in a non-limitative example an insurance company, a bank, a Mobile Network Operator etc.

Said remote server SERV is adapted to:
- compute a signature S1 of a command CD with said private key Kpv (function illustrated in Fig. 1 COMP(SERV, S1, CD, Kpv));
- send to said electronic device D said signature S1 and said command CD using a short message service SMS (function illustrated in Fig. 1 TX(SERV, D, S1, CD, SMS)).

The signature S1 permits the electronic device D to authenticate the sender of the command CD and to check that the command CD has not been altered.

In a non-limitative embodiment, the ECDSA algorithm (Elliptic Curve Digital Signature) is used to perform said signature S1.

It is to be noted that the remote server SERV, when about to send a command CD, has no way to know if the targeted electronic device D will be able to receive the command CD through the secure channel communication Sch.

Therefore, the remote server SERV first sends the command CD as a push notification through the HTTP channel, and prepares the same command CD to be sent after a delay Td through the SMS channel. Once the delay Td is elapsed, the remote server SERV checks whether any response was received from the targeted electronic device D for the command CD sent by HTTP.

In case the targeted electronic device D does not respond to the command sent through HTTP channel, the remote server SERV sends the same command CD by SMS in order to reach said electronic device D.

Hence, said remote server SERV is further adapted to:
- send to said electronic device D said command CD using a secure channel communication Sch ((function illustrated in Fig. 1 TX(SERV, D, CD, Sch)).
- check after a predetermined delay Td if said command CD has received an event E as a response from said electronic device D through the secure channel communication Sch (function illustrated in Fig. 1 CHK(SERV, CD, E, Sch)).

In a non-limitative embodiment, said secure channel communication Sch is established via an Hyper Text Transfer Protocol HTTP using a Transport Layer Security Handshake TLS.

In non-limitative examples, a command CD is:
- a get location command CD1; or
- a play sound command CD2; or
- a lock/unlock command CD3; or
- a wipe of data command CD5; or
- a deactivation application command CD6.

It is to be noted that wiping the data, means that all the end-user's data in the electronic device D are erased. The data are in non-limitative examples photos, videos, contacts, applications, etc.

In a non-limitative embodiment, the command CD comprises a command unique identifier IDC. It avoids executing the same command CD successfully on the same electronic device, especially to avoid a replay-attack in the electronic device D. This is called an anti-replay mechanism.

When an application App1 called administration application (described later) has processed a command CD with a certain IDC, any command CD with the same IDC that arrives later, will not be processed.

In a non-limitative embodiment, the command CD further comprises an application unique identifier AID. The purpose of the application unique identifier AID is to confirm the destination of the command CD. When the destination electronic device D receives a command CD, it needs to check if the application unique identifier AID in the command is the same as the stored application unique identifier AID (received during the setup phase described later). If it is not the same, it will ignore the command.

In a non-limitative embodiment, the command CD further comprises a first timestamp TS1. It permits the electronic device D to verify that the command CD has not already been sent before to avoid a replay-attack.

It is to be noted that the destination electronic device D is identified by its own number, which is in the case of a mobile phone the phone number MSISDN.

The signature S1 and the command CD are encapsulated into a Short Message Service SMS to be sent to the electronic device D. The short message service Peer to Peer protocol SMPP is used to send the SMS.

It is to be reminded that a SMS comprises:
- a) a SMS TPDU header;
- b) a SMS originating address;
- c) other header which may comprises a timestamp TS;
- d) user data length;
- e) user data header length;
- f) user data header;
- g) user data which comprise either a command D or an event E (described in the following).

As a SMS and the SMPP are well-known by the man skilled in the art, they won't be further described here.

It is to be noted that, when an administration application App1 of a tenant is loaded in the electronic device D, the administration application App1 is registered to a specific port of said electronic device D. In a non-limitative embodiment, said SMS is targeted to a specific destination port of the electronic device D where an administration application App1 is so that this later executes the command comprised in said SMS. Hence, when an SMS targeted to that specific port is received by the electronic device D, the administration application App1 aborts the broadcast of the SMS so that it is not forwarded to other applications App of the electronic device D.

Said destination specific port is indicated into the user data header of the SMS.

In a non-limitative embodiment, the SMS (which comprises said signature S1 and said command CD) is a binary SMS which is not visible for the electronic device's end-user in his SMS inbox or SMS outbox, as opposed to a text SMS that comprises human-readable text which is meant for the end-user. The command CD is therefore not listed among any text message that the end-user may received and not read on the screen SC of the electronic device.

The binary SMS comprises data that are specific to the administration application App1.

In a non-limitative embodiment, an SMS sent from said remote server SERV to said electronic device D comprises only one command CD. Indeed, usually a SMS comprises up to 160 bytes and a command CD comprises at least 100 bytes.

In a non-limitative embodiment, the command CD is in a TLV format (Tag-Length-Value) which comprises:
- a message type indicator MTI : a remote server command CD type or an electronic device event E type;
- a header length;
- a security parameter indicator SPI for indicating if there is a signature S, an enciphering of the command CD, or both;
- the length of the signature S;
- a signature S;
- an application unique identifier AID.

It is to be noted that the type of command CD is defined by the different kind of commands above-described CD1, CD2, CD3 etc.

The application unique identifier AID permits:
- said remote server SERV to retrieve from memory the private key Kpv associated with said public key Kpu.
- said remote server SERV to retrieve from memory the secret key Ks associated to the electronic device D.

In a non-limitative embodiment, said remote server SERV further comprises a secret key Ks (stored in memory) and said remote server SERV is adapted to encipher said command CD with its secret key Ks (function illustrated in Fig. 1 ENCIPH(SERV, CD, Ks)). It avoids a malware to modify said command CD.

The enciphering is useful when the command CD comprises private data, as a PIN code like or any other credentials in a non-limitative example.

A same secret key Ks is shared between the remote server SERV and the electronic device D.

The remote server SERV comprises as many secret Ks as there are electronic devices D (with which it communicates).

The enciphering is performed using a symmetric key algorithm, which is in non-limitative example an AES (Advance Encryption Standard) algorithm. These symmetric key algorithms being well-known by the man skilled in the art, they are not described here.

As will be described in the following, the electronic device D will send an event E using also an SMS. Said event E may be a response to the command CD sent by the remote server SERV. Said event E is computed though the one way function with the secret key Ks owned by both the electronic device D and the remote server SERV, to output the cryptographic data.

Therefore, the remote server SERV is adapted to:
- receive a short message service SMS comprising the cryptographic data S2 and said event E (function illustrated in Fig. 1 RX(SERV, D, S2, E, SMS);
- check said cryptographic data S2 with its secret key Ks (function illustrated in Fig. 1 CHK(SERV, S2, Ks);
- process said event E (function illustrated in Fig. 1 PROCSS(SERV, E)).

Processing an event E means that the remote server SERV recognizes the event type and information enclosed according to its type, and it stores all event information (for example date and time of reception, application unique identifier AID, type E1, E2, E3, E4, E5, E6, E7 etc.).

The event E may be enciphered by the electronic device D with the shared secret key Ks. Therefore, the remote server SERV is further adapted to decipher said event E with its secret key Ks (function illustrated in Fig. 1 DECIPH(SERV, E, Ks)).

When a second timestamp TS2 associated to an event E is used (which is described later), the remote server SERV is further adapted to store, for each type of event E, the second timestamp TS2 of a received event E and once a new event E arrives, to compare the second timestamp TS2 of said new event E with the one stored for a same type of event E (function illustrated in Fig. 1 CMP(SERV, E, TS2)).

The remote server SERV transmits the public key Kpu to the electronic device D during a set-up phase PH0, when the administration application App1 is launched for the first time.

In this set-up phase PH0, the remote server SERV is adapted to:
- receive some credentials CR from said electronic device D (function illustrated in Fig. 1 RX(SERV, D, CR));
- authenticate the administration application App1 according to said credentials CR (function illustrated in Fig. 1 AUTH(SERV, App1, CR));
- generate said application unique identifier AID (function illustrated in Fig. 1 GEN(SERV, AID));
- send to said electronic device D said application unique identifier AID and said public key Kpu via a secure channel communication Sch (function illustrated in Fig. 1 TX(SERV, D, AID, Kpu, Sch)).

It is to be noted that the credentials CR are the end-user's authentication parameters which comprise in a non-limitative embodiment a login identity (in non limitative examples username, email etc.) and a password.

During the set-up phase PH0, the remote server SERV is further adapted to generate an API key.

It is to be noted that during the HTTP communications which take place between the electronic device D and the remote server SERV after the set-up phase PH0, HTTP requests will be sent by the electronic device D to the remote server SERV, said HTTP requests comprising the API key. It permits the remote server SERV to:
- know if the electronic device D has been authenticated via the end-user's credentials CR;
- identify the secret key Ks (which is unique to one electronic device D) to be used for said electronic device D.

It is to be noted that an API key is unique per application App of the electronic device D and therefore for the administration application App1.

When a secret key Ks is used, said remote server SERV is further adapted to:
- generate said secret key Ks associated to said electronic device D (function illustrated in Fig. 1 GEN(SERV, Ks, D)).; and
- send to said electronic device D said secret key Ks via said secure channel communication Sch (function illustrated in Fig. 1 TX(SERV, D, Ks, Sch)).

### • Electronic device D

The electronic device D is illustrated in Fig. 1.

Said electronic device D comprises said public key Kpu associated to the private key Kpv above described.

It is to be noted that the electronic device D is supplied to an end-user by a tenant.

The functions of the electronic device D described in the following are processed by the electronic device D by means of a unit processor PR in a non-limitative embodiment. More particularly, these functions are carried out by the administration application App1 after the set-up phase PH0 (described later).

It is to be noted that a unit processor comprises one or a plurality of processors.

The electronic device D is adapted to:
- receive from the remote server SERV said short message service SMS comprising said signature S1 and said command CD (function illustrated in Fig. 1 RX(D, SERV, S1, CD, SMS));
- check said signature S1 with said public key Kpu (function illustrated in Fig. 1 CHK(D, S1, Kpu));
- execute said command CD (function illustrated in Fig. 1 EXEC(D, CD)).

In a non-limitative embodiment, the electronic device D is further adapted to send an event E to said remote server SERV via a secure SMS.

In a first non-limitative variant, the event E is sent as a response to a command CD previously sent by the remote server SERV.

In a second non-limitative variant, the event E is sent spontaneously.

In non-limitative embodiments, said event E is:
- a location event E1; or
- a play sound event E2; or
- a lock/unlock event E3; or
- an unlock failed event E4;
- a wipe of data event E5; or
- an application deactivation event E6; or
- a phone number changed event E7

It is to be noted that these events E1 to E3 and E5 may be sent by the electronic device D respectively as a response to the commands CD1 to CD3 and CD5 above-described. The event E4 may also be sent by the electronic device D as a response to the commands CD3.

In a non-limitative embodiment, the event E is in the same TLV format (Tag-Length-Value) than the command CD TLV format as above-described.

It is to be noted that the type of event E is defined by the different kind of events above-described E1, E2, E3 etc.

In a non-limitative embodiment, the electronic device D is further adapted to:
- compute a cryptographic data S2 of said event E with its secret key Ks (function illustrated in Fig. 1 COMP(D, S2, E, Ks)); this cryptographic data is computed from an one-way function which is one which can be calculated in one direction with no particular information, but which cannot be calculated in the inverse direction, except possibly if certain parameters are known. Examples of one-way functions could be, in particular, a checksum or a hashing function such as MD5 or SHA.
- send to said remote server SERV said cryptographic data S2 and said event E via a short message service SMS (function illustrated in Fig. 1 TX(D, SERV, S2, E, SMS).

The cryptographic data S2 permits the remote server SERV to authenticate the sender of the event E and to check that the event E has not been altered.

The cryptographic data S2 and the event E are encapsulated into a Short Message Service SMS (in the same manner than the command CD as above-described) to be sent to the remote server SERV. The short message service Peer to Peer protocol SMPP is used to send the SMS.

In a non-limitative embodiment, the event E further comprises an event unique identifier IDE. It permits the remote server SERV to verify that said event E has not already been sent before.

It avoids executing the same event E successfully on the remote server SERV, especially to avoid a replay-attack on the remote server SERV. This is called an anti-replay mechanism. When the remote server SERV has processed an event E with a certain IDE, any event E with the same IDE that arrives later, will not be processed.

In a non-limitative embodiment, the event E further comprises an application unique identifier AID.

The purpose of the application unique identifier AID is to confirm the destination of the event E. When the remote server SERV receives an event E, it needs to check if the application unique identifier AID in the event is the same as the stored application unique identifier AID (generated during the setup phase described later). If it is not the same, it will ignore the event. It is to be noted that the destination remote server SERV is configured for the event E, via an URL for the HTTP communication, and via the MSISDN (Mobile Subscriber ISDN Number) for an SMS.

In a non-limitative embodiment, the event E further comprises a second timestamp TS2. It permits the remote server SERV to verify that the event E has not already been sent before to avoid a replay-attack.

In a non-limitative embodiment, when a secret key Ks is used, said electronic device D comprises the same secret key Ks (stored in memory) than the remote server SERV. This secret key Ks is a shared secret key.

In a non-limitative embodiment, said electronic device D is further adapted to encipher said event E with its secret key Ks (function illustrated in Fig. 1 ENCIPH(D, E, Ks)). It permits to add a security layer on top of the one provided by the TLS. It lowers the risk of a man-in-the middle (MITM) attack.

The enciphering by the electronic device D above-described are performed using a symmetric key algorithm, which is in non-limitative example an AES (Advance Encryption Standard) algorithm. These symmetric key algorithms being well-known by the man skilled in the art, they are not described here.

When receiving an enciphered command CD, the electronic device D is further adapted to decipher said command CD with its secret key Ks (function illustrated in Fig. 1 DECIPH(D, CD, Ks)).

When a first timestamp TS1 is used, the electronic device D is further adapted to store, for each type of command CD, the first timestamp TS1 of a received command CD and once a new command CD arrives, to compare the first timestamp TS1 of said new command CD with the one stored for a same type of command CD (function illustrated in Fig. 1 CMP(D, CD, TS1)).

In order to receive the public key Kpu above-described, during the set-up phasePH0, the electronic device D is further adapted to:
- launch the administration application App1 for the first time (function illustrated in Fig. 1 LCH(D, App1));
- transmit some credentials CR to said remote server SERV (function illustrated in Fig. 1 TX(D, SERV, CR));
- establish a secure channel communication Sch with said remote server SERV (function illustrated in Fig. 1 SET(D, SERV, Sch));
- receive from said remote server SERV via said secure channel communication Sch said application unique identifier AID and said public key Kpu (function illustrated in Fig. 1 RX(D, SERV, AID, Kpu, Sch)); and
- store said application unique identifier AID and said public key Kpu (function illustrated in Fig. 1 ST(D, AID, Kpu)).

In a non-limitative embodiment, the electronic device D is adapted to use an indicator to indicate if the administration application App1 has been previously launched or not. When the administration application App1 is installed on the electronic device D, there is an associated icon which appears on the screen on said electronic device D. When the end-user clicks on said icon for the first time after the administration application App1 has been installed, the administration application App1 is launched. After it is launched, the administration application App1 stores the indicator that indicates that it has been launched. The next time the end-user launches said administration application App1, the administration application App1 knows that it is not the first time anymore and that it has been previously launched.

When a secret key Ks is used, in a non-limitative embodiment, the electronic device D is further adapted to receive from said remote server SERV via said secure channel communication Sch said secret key Ks associated to said administration application App1 (function illustrated in Fig. 1 RX(D, SERV, Ks, Sch)), and store it securely in memory (function illustrated in Fig. 1 ST(D, Ks)).

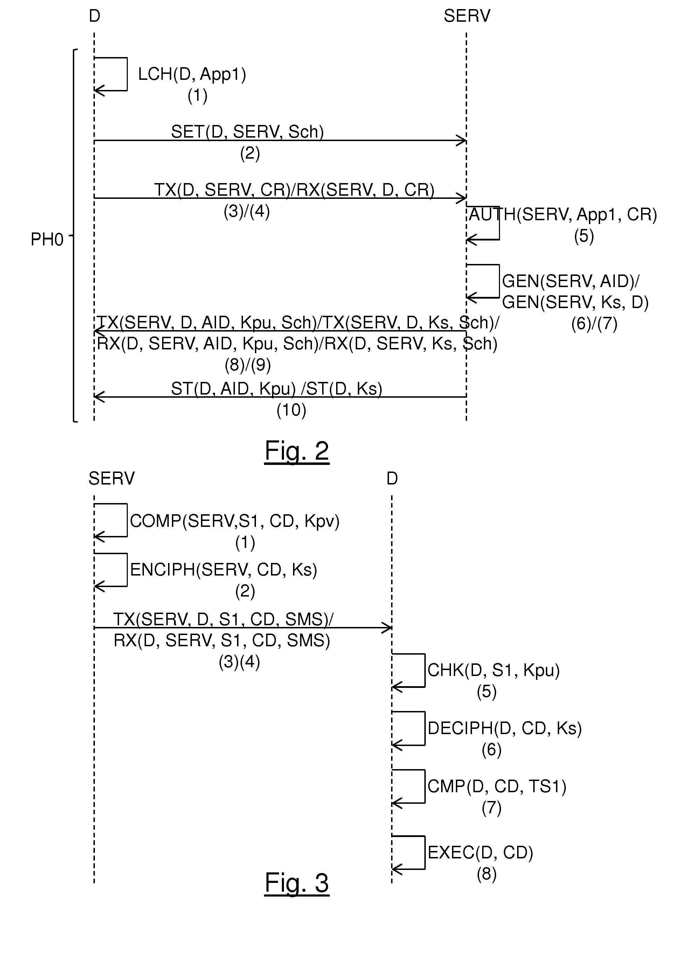

The set-up phasePH0 is illustrated in Fig. 2.

In the non-limitative example illustrated, a secret key Ks is used.

**In step 1),** the electronic device D launches the administration application App1.

**In step 2),** the electronic device D establishes a secure channel communication Sch with said remote server SERV. In the non-limitative example, the Hyper Text Transfer Protocol HTTP using a Transport Layer Security Handshake TLS is used for said establishment.

During said protocol, the electronic device D checks the validity of a remote server certificate which has been signed from an authority which manages said remote server and proposes said administration application App1.

When the secure channel communication Sch is established, the end-user is able to enter his credentials CR which comprise in a non-limitative embodiment a login identity and a password.

**In step 3),** the electronic device D transmits to the remote server SERV said end-user's credentials CR and said remote server SERV receives them **in step 4).**

**In step 5),** the remote server SERV authenticates the electronic device D by checking the end-user's authentication parameters which are the credentials CR.

**In step 6),** the remote server SERV generates the application unique identifier AID and stores it securely in memory. Said application unique identifier AID will be therefore associated to said administration application App1 and therefore to said electronic device D.

The remote server SERV creates also the API key above-described (not illustrated).

This application unique identifier AID and the API key will be linked to said secret key Ks so that when needed, said remote server SERV retrieves the right secret key Ks for the electronic device D.

**In step 7),** the remote server SERV generates the secret key Ks for the electronic device D and stores it securely.

The remote server SERV retrieves the correct public key Kpu associated to the tenant of the electronic device D for subsequent secure SMS communications with the electronic device D and transmits said public key Kpu, said secret key Ks and said application unique identifier AID to the electronic device D **in step 8)** and sais API key (not illustrated), which receives them **in step 9)** and stores them securely **in step 10).** The electronic device D will use the application unique identifier AID and send it as part of an event E.

### • Sending a command CD

When the remote server SERV sends a command CD to the electronic device D, it begins to send it via the secure channel communication Sch. Once the predetermined delay Td is elapsed, the remote server SERV checks whether any response was received from the targeted electronic device D for the command CD via said secure channel communication Sch. If no response was received, the remote server SERV switches to the fallback SMS communication to send the command CD. Said command CD is sent again via the SMS channel SMSc as following as illustrated in Fig. 3.

In the non-limitative example illustrated, the command CD is enciphered and a first timestamp TS1 is used.

**In step 1),** the remote server SERV signs the command CD with the private key Kpv: it computes the signature S1.

**In step 2),** the remote server SERV enciphers the command CD with the secret key Ks and sends to said electronic device D the enciphered command CD and the signatures S1 via an SMS **in step 3).**

**In step 4),** the electronic device D receives the SMS comprising the command CD, checks the security parameter indicator SPI to decide whether to verify the signature, to decipher the command CD. In a non-limitative embodiment, when there is a plurality of versions of the protocol communication between said electronic device D and said remote server SERV using the HTTP and the SMS as described, the electronic device D is further adapted to compare the MTI and the version value of the protocol communication. In the non-limitative example, there is only one version of the protocol communication. The version value is equal to one.

**In step 5),** the electronic device D verifies the signature S1 using the public key Kpu that was received during the set-up phase PH0.

In case the signature S1 is invalid, the electronic device D discards the command CD. Otherwise, **in step 6),** it deciphers the command CD using the secret key Ks. In case the command could not be deciphered, the electronic device D discards the command CD, otherwise, **in step 7),** the electronic device D performs an anti-replay check with the IDC and with the first timestamp TS1. The first timestamp TS1 of the current command CD is compared to the stored first timestamp TS1 (if any) for the same type of command CD.

In case, the current first timestamp TS1 is lower or equal to the stored one, the command CD is discarded. It means that it has been already executed. Otherwise, the electronic device D executes the command CD **in step 8).**

It is to be noted that when the command CD is deciphered and the signature S1 is verified, the command CD is considered as genuine.

When the command CD has been executed on the electronic device D, the electronic device D sends back an event E as described in the following.

### • Sending an event E

In the non-limitative example illustrated, the event E is enciphered and a second timestamp TS2 is used. Moreover, in the non-limitative example illustrated, the event E is sent as a response to the command CD sent by the remote server SERV.

Before sending back the event E, the electronic device D checks if the data channel SCh is available, and in case it is not (the data connection has failed), then the event E is sent by the SMS channel SMSc to the remote server SERV.

It is to be noted that if the data channel Sch is available, the electronic device D sends back the event E via said data channel SCh. If the electronic device doesn't receive an acknowledgment of said event E from the remote server SERV, the electronic device D sends again the event E this time via the SMS channel SMSc. It is to be noted that in the case of an HTTP communication, the acknowledgment is an HTTP response code 200. In the case of an SMS, the acknowledgment is a delivery report (managed by the mobile network operator) of the SMS.

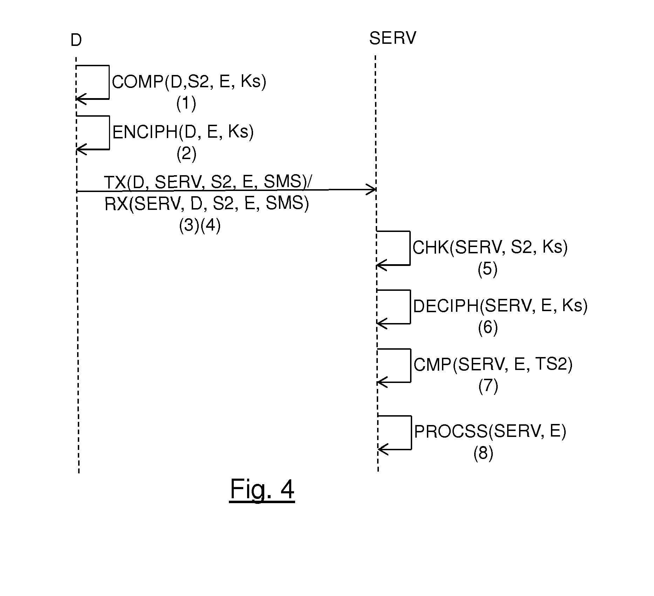

The event E is sent via the SMS channel SMSc as following as illustrated in Fig. 4.

**In step 1),** the electronic device D signs the event E with the secret key Ks: it computes the cryptographic data S2.

**In step 2),** the electronic device D enciphers the event E with the secret key Ks and sends to said remote server SERV the event E and its cryptographic data S2 **in step 3).**

**In step 4),** the remote server SERV receives the SMS comprising the event E, checks the security parameter indicator SPI to decide whether to verify the cryptographic data, to decipher the event E.

In a non-limitative embodiment, when there is a plurality of versions of the protocol communication between said electronic device D and said remote server SERV using the HTTP and the SMS as described, the remote server SERV is further adapted to compare the MTI and the version value of the protocol communication. In the non-limitative example, there is only one version of the protocol communication. The version value is equal to one.

The remote server SERV also verifies the unique application identifier AID comprised in the event E to identify the electronic device's administration application App1 from which the event E is coming.

The remote server SERV gets the secret key Ks linked to the electronic device D from its secure storage, and verifies the cryptographic data S2 using its own secret key Ks **in step 5).**

In case the cryptographic data S2 is invalid, the remote server SERV discards the event E. Otherwise, **in step 6),** it deciphers the event E using its secret key Ks. In case the event E could not be deciphered, the remote server SERV discards the event E, otherwise, **in step 7),** it performs an anti-replay check with the IDE and with the second timestamps TS2. The second timestamp TS2 of the current event E is compared to the stored second timestamp TS2 (if any) for the same type of event E.

In case, the current second timestamp TS2 is lower or equal to the stored one, the event E is discarded. It means that it has been already processed. Otherwise, the remote server SERV processes the event E **in step 8).**

It is to be noted that when the event E is deciphered and the cryptographic data S2 is verified, the event E is considered as genuine.

Hence, said secure SMS communication between the remote server SERV and the electronic device D permits to:
- a) help the end-user to locate his mobile phone if lost;
- b) prevent access to his private content if his mobile phone has been stolen for example. When the mobile phone is located (with the get location command CD1 -case a)), a lock command CD3 may be sent to prevent a thief to access the mobile phone, or even a wipe of data command CD5 may be sent to completely remove all end-user's data in the mobile phone ;

- c) if a thief changes the SIM card to use his own SIM card for example, the electronic device D detects the new phone number and reports it with its location to the remote server, through an SMS, so the stolen mobile phone can still be located and reached. When the mobile phone is located, a lock command CD3 may be sent to prevent a thief to access the mobile phone, or even a wipe of data command CD5 may be sent to completely remove all end-user's data in the mobile phone;
- d) retrieve the current location (by sending a get location command CD1) of the mobile phone and check whether it is or not in the location familiar to the end-user, for example his house, his workplace etc.
- e) send a play sound command CD2. If the mobile phone is near the end-user, the insurance representative will hear it. In case the mobile-phone is really lost and is out of the user's range, the representative will not be able to hear the played sound ;
- f) if the mobile phone has been stolen and the thief tries to unlock it by entering a password, when he fails by entering a wrong password, the mobile phone notifies the remote server SERV using the unlock failed event E4, which is a wrong password input event.

It is to be noted that the application deactivation command CD6 is not involved on the deactivation process (described in the following). Instead, it will only be triggered by the remote server SERV if the end-user account is deleted for some reasons (in a non-limitative example, the end-user is not active for some time). Indeed, before all end-user's data are deleted from the remote server database, one needs to make sure that the administration application App1 is deactivated. If said administration application App1 is not deactivated, the end-user still needs to authenticate to the remote server SERV when he performs the said deactivation process later on, which will not be possible if all his data are deleted from the remote server database.

In the case a), if the end-user of the electronic device D loses his electronic device D, he will able to locate his electronic device D as following in non-limitative examples. Thanks to a web application, he may send a request for location to the remote server SERV. The remote server SERV sends a get location command CD1 through HTTP channel to the electronic device D. After the predetermined delay Td, if it receives no response from the electronic device D, the remote server SERV sends the get location command CD1 to the electronic device D via a secure SMS. The electronic device D tries a GPS location or a cell location in non-limitative example, and it sends back via a secure SMS (if the HTTP channel has failed) the location event E1 comprising its location to the remote server SERV.

The same process applies for a play sound command CD2, a lock/unlock command CD3 and wipe of data command CD5.

In the case c), when the SIM card is changed, by the user or by a thief for example, in a non-limitative example, the electronic device D (via its administration application App1) detects the new phone number and sends automatically a phone number changed event E7 via a secure SMS to the remote server SERV which comprises a short code. Said short code comprises the new phone number and its location. The remote server SERV stores a new MSISDN (Mobile Subscriber ISDN Number) for that electronic device D. It permits to keep track of this new number and to use the fallback SMS communication when necessary.

Hence, the communication system SYS permits to perform insurance fraud detection. When the end-user loses his mobile phone, he will call the insurance company representative to make his claims. Then the insurance company may use at least one of the use-cases a) to g): the insurance company remotely retrieves the usage history and locates the electronic device D. The insurance company then uses the information to confirm whether the electronic device D is indeed lost. For example, if the electronic device D is detected to be in the end-user's house, it is very likely that the end-user has made a false claim.

The insurance company may additionally lock and wipe the data from the electronic device D if it is confirmed to be lost.

It is to be noted that when the end-user agrees to take an insurance policy for its electronic device, the insurance company will tell him to install and enable the administration application App1.

When the electronic device D is stolen, the owner may open a web console from where he may locate the electronic device D, or see the usage history of the electronic device to help him find it.

He may also lock the electronic device, change its PIN and even wipe its data remotely. So a thief cannot use the electronic device D or retrieve any important data from it.

Hence, anti-theft mechanism and device insurance fraud detection may be performed using the capabilities of the administration application App1.

Therefore, when the administration application App1 is uninstalled, the protections against thieves or fraudulent insured end-users are lost.

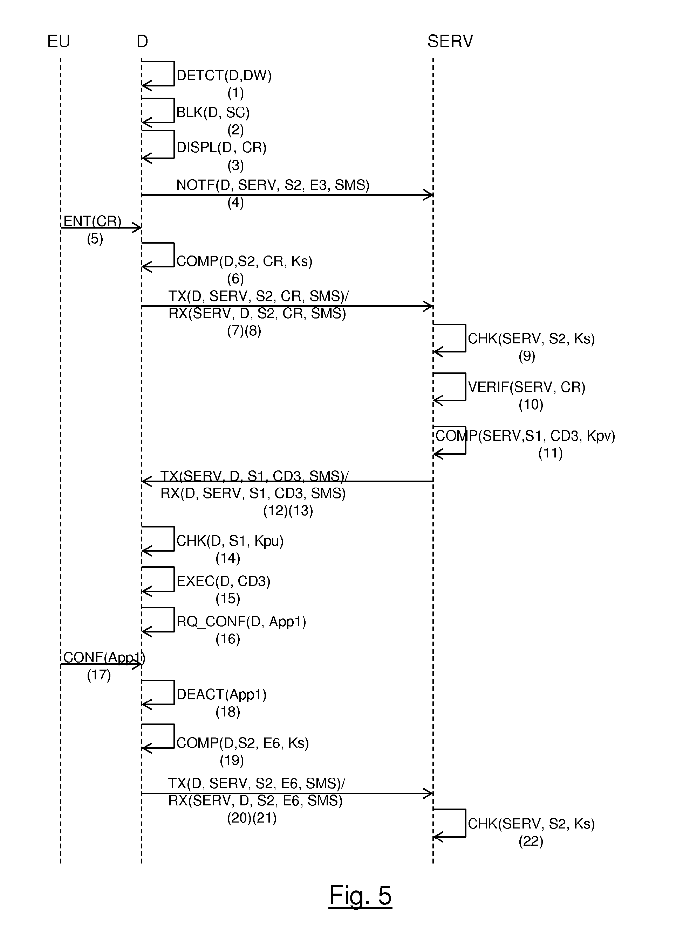

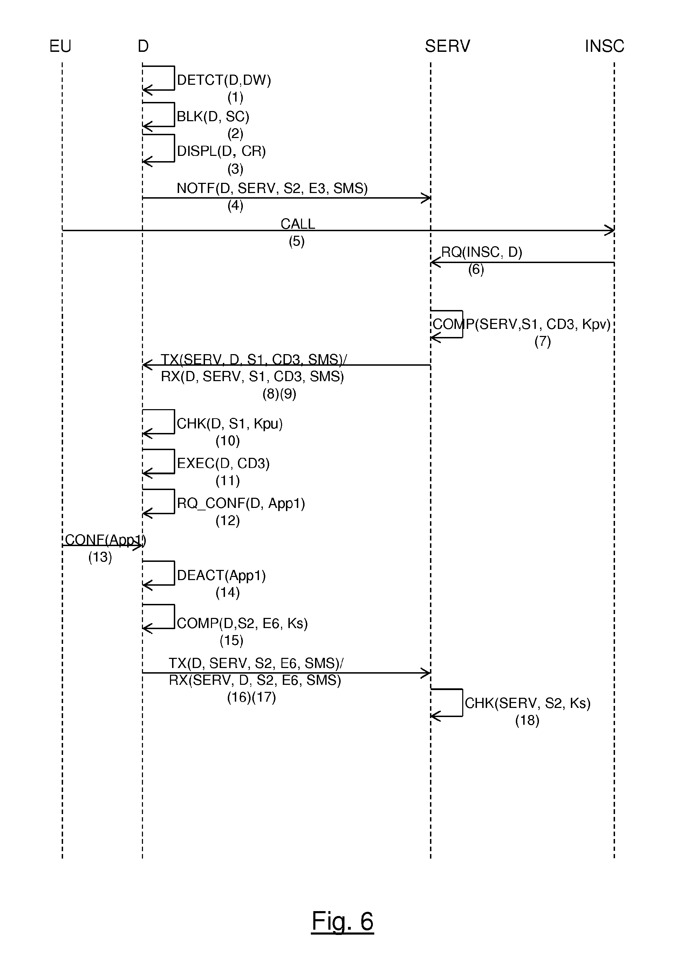

Fig. 5 and Fig. 6 illustrate a non-limitative embodiment of a use-case comprising the verification of the electronic device's end-user right to deactivate and uninstall the administration application App1 of said electronic device D. In the example illustrated, the event E is not enciphered. The use-case of Fig. 5 applies to anti-theft protection, whereas the use-case of Fig. 6 applies to fraud detection.

The verification is either performed:
- by the remote server SERV with credentials CR (use-case of Fig. 5); or
- if the electronic device is insured, by the insurance company INSC of the end-user with the identity of said end-user (use-case of Fig. 6).

When the end-user EU requests the uninstall of the administration application App1 on his electronic device D, via an uninstall button for example, one of the step before the uninstall is a deactivation of said administration application App1 via a deactivation button for example. Indeed, while the administration application App1 is still activated, the end-user is not able to request for its uninstall (the uninstall button is disabled).

When the end-user is about to deactivate and uninstall the administration application App1, the electronic device D locks its screen SC as following. The electronic device D is therefore blocked: it prohibits the end-user from performing any kind of actions on the electronic device D.

As illustrated in Fig. 5 and Fig. 6, **in step 1)** illustrated DETCT(D, DW), the electronic device D detects a deactivation warning DW, for example when the deactivation button is pressed. It is to be noted that this deactivation warning DW is used by the administration application App1 to give warning to the end-user about the implication of uninstalling it. It will also be used to block the electronic device D from being used.

**In step 2)** illustrated BLK(D, SC), the electronic device D locks its screen SC and the electronic device D displays a message to enter credentials CR **in step 3)** (illustrated DISPL(D, CR)).

It is to be noted that the locking of the screen SC causes the blocking of the electronic device D.

**In step 4)** illustrated NOTF(D, SERV, S2, E3, SMS), the electronic device D notifies via a secure SMS (if the HTTP communication has failed) the remote server SERV that the screen SC is locked. Said SMS comprises a cryptographic data S2 and the lock event E3.

This permits to track said electronic device D.

For anti-theft protection, before unblocking the electronic device D, one needs to authenticate whether the end-user is a legitimate user or a thief. This may be done by asking the end-user credentials CR. If the end-user provides valid credentials, then the electronic device D will be unblocked.

To unlock the screen SC and therefore to unblock the electronic device D, the end-user enters the credentials CR on the locked screen SC of the electronic device D. In a non-limitative example, the credentials CR comprise a login identity and a password. It is to be noted that the credentials CR are created by the end-user himself when performing a registration. This registration is needed before using the administration application App1 (in this first use-case).

Hence, as illustrated in Fig. 5, after the end-user EU enters the credentials CR (**in step 5** illustrated ENT(CR)),

**In step 6),** illustrated COMP(D, S2, CR, Ks), the electronic device D computes with its secret key Ks a cryptographic data S2 of the credentials CR.

**In step 7)** illustrated TX(D, SERV, S2, CR, SMS), the electronic device D sends a secure SMS comprising said cryptographic data S2 and said credentials CR.

**In step 8)** illustrated RX(SERV, D, CR, SMS), the remote server SERV receives said secure SMS with said credentials CR.

**In step 9)** illustrated CHK(SERV, S2, Ks), the remote server SERV verifies the cryptographic data S2 with its secret key Ks.

If said cryptographic data S2 is valid, **in step 10)** illustrated VERIF(SERV, CR), the remote server SERV verifies the credentials CR.

If the credentials CR are valid, **in step 11)** illustrated COMP(SERV, S1, CD3, Kpv), the remote server SERV computes with its private key Kpv a signature S1 of an unlock command CD3 for unlocking the screen.

**In step 12)** illustrated TX(SERV, D, S1, CD3, SMS), the remote server SERV sends back to the electronic device D the secure SMS comprising said unlock command CD3.

**In step 13)** illustrated RX(D, SERV, S1, CD3, SMS), the electronic device receives said secure SMS.

**In step 14)** illustrated CHK(D, S1, Kpu), the electronic device D verifies the signature S1 with its public key Kpu.

If the signature S1 is valid, **in step 15)** illustrated EXEC(D, CD3), the electronic device D executes the unlock command CD3: the screen SC is unlocked. The unlocking of the screen SC causes the unblocking of the electronic device D.

**In step 16)** illustrated RQ_CONF(D, App1), the electronic device D requests the end-user to confirm the deactivation of the administration application App1. If the end-user confirms it **(in step 17)** illustrated CONF(App1), the administration application App1 is deactivated **in step 18)** illustrated DEACT(App1)

**In step 19)** illustrated COMP(D, S2, E6, Ks), the electronic device D computes with its secret key Ks a cryptographic data S2 of the application deactivation event E6,

**In step 20)** illustrated TX(D, SERV, S2, E6, SMS), the electronic device send via a secure SMS said cryptographic data S2, said deactivation event E6 to the remote server SERV, which receives it **(step 21** illustrated RX(SERV, D, E6, SMS), checks the cryptographic data S2 **(step 22** illustrated CHK(SERV, S2, Ks) and stores the information that the administration application App1 is deactivated for said end-user's electronic device D.

As the deactivation is successful, the administration application App1 may be uninstalled by the end-user.

For fraud detection, there are no credentials CR provided by the end-user EU. The end-user EU has to call the insurance company INSC (**step 5** illustrated CALL in Fig. 6) to unblock its electronic device D. The insurance company may then ask the end-user whether he is the legitimate user and whether he intends to uninstall the administration application App1 which will void the insurance policy. The insurance company may verify in non-limitative examples the date of birth the policy/contract number of the insurance etc, If it is a valid end-user, the representative of the insurance company INSC will request the unblock of the electronic device D via a web console (**step 6** illustrated RQ(INSC, D) to unlock the screen SC and therefore to unblock the electronic device D. The remote server SERV receives said request and the steps 7 to 18 illustrated in Fig. 6 are performed. They are respectively the same than the steps 11 to 22 described for the anti-theft protection in Fig. 5.

It is to be noted that if the credentials CR are not valid, the remote server SERV elaborates:
- a secure SMS comprising an unlock command CD3 for unlocking the screen SC and an error message MSG to be displayed on the screen of said electronic device D. There is no deactivation of the administration application App1.

Hence, this avoids a thief (who doesn't know the credentials CR) to uninstall the administration application App1.

It is to be understood that the present invention is not limited to the aforementioned embodiments and variations and modifications may be made without departing from the scope of the invention.

Hence, in another non-limitative embodiment, in the case of the deactivation/uninstall use-case, the entering of the credentials CR may be performed via a web portal instead of directly via the electronic device D. In this case, the web portal sends the credentials CR entered by the end-user to the remote server SERV. It also receives from the remote server SERV the result of the validation of the credentials CR by the remote server SERV and consequently displays the error message MSG or sends an unlock command to the remote server SERV which will perform the steps 10 and 11 of Fig; 5.

In another non-limitative embodiment, the credentials CR (to authenticate the end-user for the deactivation and uninstall of the administration application App1) may be input from a web console, if valid, a remote command is sent to the electronic device D.

Hence, some embodiments of the invention may comprise one or a plurality of the following advantages:
- in case the data channel Sch is not available, it permits to still use SMS commands to reach the electronic device D and execute the secure commands securely;
- if the electronic device D needs to notify the remote server SERV on some event (like wrong password input), and if data channel Sch is not available, it permits to perform it securely by SMS;
- it avoids hackers to:
   - send via an SMS a command to the electronic device to take control over the electronic device;
   - intercept via an SMS a command, retrieve confidential data from it (such as a PIN code) or tamper it;
   - impersonate via an SMS an electronic device application to send false information to the remote server;
   - send via an SMS a command intended for an electronic device to another electronic device;
   - perform via an SMS replay attacks, meaning intercept a genuine command and send it again numerous times;
   - the combination of symmetric and asymmetric cryptographic algorithms permits to reduce computational and storage resources in the electronic device side compare to pure asymmetric algorithm;
   - compare to pure asymmetric algorithm, the number of keys stored on the remote server side is reduced;
   - it doesn't add additional hardware to the electronic device D or to the remote server SERV;
   - it doesn't need to rely on third party such as mobile network operator;
   - it doesn't have any negative effects on the electronic device's performance;
   - it permits to secure a SMS communication;
   - for an SMS communication, it provides confidentiality of data thanks to the enciphering of the command/event;
   - for an SMS communication, it provides integrity of the command/event as they are always signed/integrity data computed, which ensures that their content cannot be modified;
   - for an SMS communication, It provides an authentication and a non-repudiation mechanism of the sender of a command/event thanks to the asymmetric cryptographic algorithm applies for the remote server to the electronic device communication; and thanks to the symmetric cryptographic algorithm applies for the electronic device to remote server communication;
   - for an SMS communication, It provides an anti-replay mechanism thanks to the timestamps TS1, TS2, and to the command unique identifier IDC and event unique identifier IDE;
   - the secure SMS communication provides a more secure communication between the remote server and the electronic device than an HTTP communication, or a plain text SMS communication;
   - it protects the electronic device D from thieves and give a mean for insurance company to detect fraudulent insured end-user;
   - it permits end-users to be confident that they have stronger protection for their electronic device;
   - it permits insurance companies to make more profit by decreasing the number of frauds .

## Claims

1. Communication system (SYS) for performing a communication between an electronic device (D) and a remote server (SERV), wherein said communication system (SYS) comprises:
- said remote server (SERV) which comprises a pair of public key (Kpu)-private key (Kpv) and which is adapted to:
- compute a signature (S1) of a command (CD) with said private key (Kpv);
- send to said electronic device (D) said signature (S1) and said command (CD) using a short message service (SMS);
- said electronic device (D) which comprises said public key (Kpu) and which is adapted to:
- receive from said remote server (SERV) said short message service (SMS) comprising said signature (S1) and said command (CD);
- check said signature (S1) with said public key (Kpu);
- execute said command (CD).

2. Communication system (SYS) according to the previous claim, wherein:
- said electronic device (D) is further adapted to:
- compute a cryptographic data (S2) of an event (E) with its secret key (Ks);
- send to said remote server (SERV) said cryptographic data (S2) and said event (E) via a short message service (SMS);
- said remote server (SERV) is further adapted to:
- receive from said electronic device (D) said short message service (SMS) comprising said cryptographic data (S2) and said event (E);
- check said cryptographic data (S2) with its secret key (Ks);
- process said event (E).

3. Communication system (SYS) according to any of the previous claims, wherein said signature (S1) and said command (CD) are sent using a short message service (SMS) after a predetermined delay (Td) if said remote server (SERV) has not received from said electronic device (D) any event (E) as a response of said command (CD) through a secure channel communication (Sch).

4. Communication system (SYS) according to any of the previous claims, wherein said remote server (SERV) further comprises a secret key (Ks) and said electronic device (D) further comprises said secret key (Ks),
- said remote server (SERV) is further adapted to encipher said command (CD) with its secret key (Ks) or to decipher said event (E) with its secret key (Ks);
- said electronic device (D) is further adapted to decipher said command (CD) with its secret key (Ks) or to encipher said event (E) with its secret key (Ks).

5. Communication system (SYS) according to anyone of the previous claims,
wherein said command (CD) further comprises a first timestamp (TS1), and wherein said electronic device (D) is adapted to verify said first timestamp (TS1), and/or
wherein said event (E) comprises a second timestamp (TS2), and wherein said remote server (SERV) is further adapted to verify said second timestamp (TS2).

6. Communication system (SYS) according to anyone of the previous claims, wherein said command (CD) is:
- a get location command (CD1); or
- a play sound command (CD2); or
- a lock/unlock command (CD3); or
- a wipe of data command (CD5); or
- a deactivation application command (CD6).

7. Communication system (SYS) according to anyone of the previous claims, wherein, wherein said event (E) is:
- a location event (E1); or
- a play sound event (E2); or
- a lock/unlock event (E3); or
- an unlock failed event (E4); or
- a wipe of data event (E5); or
- an application deactivation event (E6); or
- a phone number changed event (E7).

8. Communication system (SYS) according to anyone of the previous claims, wherein during an enrollment phase:
- said electronic device (D) is further adapted to:
- launch an application (App1) for the first time;
- transmit some credentials (CR) to said remote server (SERV);
- establish a secure channel communication (Sch) with said remote server (SERV);
- receive from said remote server (SERV) via said secure channel communication (Sch) an application unique identifier (AID) and said public key (Kpu);
- store said application unique identifier (AID) and said public key (Kpu);
- said remote server (SERV) is further adapted to:
- receive said credentials (CR) from said electronic device (D);
- authenticate said application (App1) according to said credentials (CR);
- generate said application unique identifier (AID);
- send to said electronic device (D) said application unique identifier (AID) and said public key (Kpu) via said secure channel communication (Sch).

9. Communication system (SYS) according to the previous claim 10, wherein:
- said electronic device (D) is further adapted to:
- receive from said remote server (SERV) via said secure channel communication (Sch) a secret key (Ks) associated to said electronic device (D); and
- store said secret key (Ks);
- said remote server (SERV) is further adapted to:
- generate said secret key (Ks) associated to said electronic device (D); and
- send to said electronic device (D) said secret key (Ks) via said secure channel communication (Sch).

10. Communication system (SYS) according to anyone of the previous claims 1 to 12, wherein said electronic device (D) is a mobile phone, a tablet, a smart phone, a notebook.

11. Communication system (SYS) according to anyone of the previous claims, wherein:
- said electronic device (D) comprises a screen (SC) and is further adapted to:
- detect an application deactivation warning (DW);
- upon said detection, lock its screen (SC);
- receive a short message service (SMS) comprising a signature (S1) with an unlock command (CD3);
- check said signature (S1) with said public key (Kpu);
- unlock its screen (SC) and deactivate an application (App1);
- compute a cryptographic data (S2) of an application deactivation event (E6) with its secret key (Ks);
- send to said remote server (SERV) said cryptographic data (S2), and said application deactivation event (E6) using a short message service (SMS);
- said remote server (SERV) is further adapted to:
- compute said signature (S1) of said unlock command (CD3) with its private key (Kpv);
- send to said electronic device (D) said signature (S1) with said unlock command (CD3) using a short message service (SMS);
- receive a short message service (SMS) comprising said cryptographic data (S2) and said application deactivation event (E6);
- check said cryptographic data (S2) with its secret key (Ks).

12. Communication system (SYS) according to the previous claim 14, wherein:
- said electronic device (D) is further adapted to:
- request end-user's credentials (CR);
- compute a cryptographic data (S2) of said end-user's credentials (CR) with its secret key (Ks); and
- send to said remote server (SERV) said cryptographic data (S2) and said end-user's credentials (CR) using a short message service (SMS);
- said remote server (SERV) is further adapted to:
- receive said short message service (SMS) comprising said cryptographic data (S2) and said end-user's credentials (CR);
- check said cryptographic data (S2) with its secret key (Ks); and
- check said end-user's credentials (CR).

13. Method (MTH) for performing a communication between an electronic device (D) and a remote server (SERV) said remote server (SERV) comprising a pair of public key (Kpu)-private key (Kpv) and said electronic device (D) comprising said public key (Kpu), wherein said method (MTH) further comprises:
- compute by means of said remote server (SERV) a signature (S1) of a command (CD) with said private key (Kpv);
- send by means of said remote server (SERV) to said electronic device (D) said signature (S1) and said command (CD) using a short message service (SMS);
- receive by means of said electronic device (D) said short message service (SMS) comprising said signature (S1) and said command (CD);
- check by means of said electronic device (D) said signature (S1) with said public key (Kpu); and
- execute by means of said electronic device (D) said command (CD).

14. An electronic device (D) which is adapted to communicate with a remote server (SERV) which comprises a pair of public key (Kpu)-private key (Kpv), said electronic device comprising said public key (Kpu), wherein said electronic device (D) is adapted to:
- receive from said remote server (SERV) a short message service (SMS) comprising:
- a signature (S1) of a command (CD) which has been computed by said remote server (SERV) with said private key (Kpv); and
- said command (CD);
- check said signature (S1) with said public key (Kpu);
- execute said command (CD).

15. A remote server (SERV) which is adapted to communicate with an electronic device (D), said remote server (SERV) comprising a pair of public key (Kpu)-private key (Kpv) and said electronic device (D) comprising said public key (Kpu), wherein said remote server (SERV) is adapted to:
- compute a signature (S1) of a command (CD) with said private key (Kpv);
- send to said electronic device (D) said signature (S1) and said command (CD) using a short message service (SMS).
